# EUROPÄISCHE PATENTSCHRIFT

(11) **EP 3 785 855 B1**
(45) Veröffentlichungstag und Bekanntmachung des Hinweises auf die Patenterteilung: **22.01.2025**
(21) Anmeldenummer: 20192532.8
(22) Anmeldetag: 25.08.2020
(51) Int. Cl.: B25B 13/46, B25B 27/00

(54) **FAHRRADWERKZEUG**
BICYCLE TOOL
OUTIL DE BICYCLETTE

(30) Priorität: 28.08.2019 DE 202019104721 U
(43) Veröffentlichungstag der Anmeldung: 03.03.2021
(73) Patentinhaber: Canyon Bicycles GmbH, 56073 Koblenz (DE)
(72) Erfinder: Klampfl, Dominik, 56179 Niederwerth (DE)
(74) Vertreter: dompatent von Kreisler Selting Werner - Partnerschaft von Patent- und Rechtsanwälten mbB

(56) Entgegenhaltungen:
- EP-A1- 3 453 876
- WO-A1-95/10426
- US-A1- 2017 113 338
- US-A1- 2017 233 027
- US-B1- 9 194 385

## Beschreibung

Die Erfindung betrifft ein Fahrradwerkzeug.

Neben Fahrradwerkzeugen, die über Klappmechanismen unterschiedliche Werkzeuge wie Inbusschlüssel, Maulschlüssel und dergleichen aufweisen, werden von Fahrradfahrern häufig auch weitere Werkzeuge und Reparaturkits mitgeführt. Beispielsweise handelt es sich hierbei um Gaskartuschen, um beispielsweise nach einem Wechseln eines Fahrradschlauches diesen schnell wieder zu befüllen. Ein weiterer Reparaturkit existiert für schlauchlose Reifen, um größere Löcher reparieren zu können, die von der Dichtmilch nicht automatisch verschlossen werden. Ein derartiger Reparaturkit wird unter der Bezeichnung Dynaplug angeboten.

Aus US 2017/0113338 ist ein Fahrradwerkzeug gemäß Oberbegriff des Anspruchs 1 bekannt.

Aufgabe der Erfindung ist es, ein kompaktes Fahrradwerkzeug zu schaffen. Die Lösung der Aufgabe erfolgt durch ein Fahrradwerkzeug mit den Merkmalen des Anspruchs 1.

Das erfindungsgemäße Fahrradwerkzeug weist eine Ventil-Verbindungseinrichtung auf. Diese ist vorzugweise zylindrisch, insbesondere kreiszylindrisch ausgebildet und vorzugweise mit einem geeigneten Anschluss, insbesondere einem Gewinde versehen, um mit dem Ventil eines Fahrradreifens zum Befüllen verbunden werden zu können. Ferner weist das erfindungsgemäße Fahrradwerkzeug ein Werkzeugelement auf. Dieses Werkzeugelement ist mit der Ventil-Verbindungseinrichtung in deren Längsrichtung verbunden. Die Längsrichtung der Ventil-Verbindungseinrichtung ist insbesondere bei einer zylindrischen Ventil-Verbindungseinrichtung die Mittellinie. Durch das Vorsehen eines Werkzeugelements, das in Längsrichtung mit der Ventil-Verbindungseinrichtung verbunden ist, ist ein im Wesentlichen langgestrecktes Fahrradwerkzeug realisiert. Ein derartig langgestrecktes Fahrradwerkzeug kann auf einfache Weise transportiert werden. Beispielsweise kann ein derartiges Fahrradwerkzeug, das vorzugsweise ähnliche Abmessungen wie eine mitzuführende kleine Fahrradpumpe aufweist, in der Trikottasche auf einfache Weise mitgeführt werden. Auch in üblicherweise im Bereich von Trinkflaschenhalterungen vorgesehenen Halterungen für Fahrradpumpen kann ein derartiges erfindungsgemäßes Fahrradwerkzeug auf einfache Weise angeordnet und mitgeführt werden. Des Weiteren besteht insbesondere bei Fahrradrahmen aus Carbon oder einem anderen entsprechenden Werkstoff die Möglichkeit, dass im Oberrohr ein Aufnahmefach vorgesehen ist. Insbesondere aufgrund der langgestreckten Ausgestaltung des erfindungsgemäßen Fahrradwerkzeugs kann dieses auf einfache Weise in einem derartigen, insbesondere im Oberrohr eines Fahrradrahmens vorgesehenen Aufbewahrungsfach angeordnet werden.

Vorzugsweise weist das Werkzeugelement einen Aufnahmeraum auf. In dem Aufnahmeraum können unterschiedliche Werkzeuge aufgenommen werden. Besonders bevorzugt ist es, dass der Aufnahmeraum von einem Verschluss-element wie einem Deckel verschließbar ist, wobei sich die Öffnung des Aufnahmeraums vorzugsweise in Längsrichtung, d.h. an einem der beiden Enden des Werkzeugelements befindet.

Das Verschlusselement kann vorzugsweise mit einem Werkzeug verbunden sein. Insofern ist es möglich, ein zum Transport innerhalb des Aufnahmeraums des Werkzeugelements angeordnetes Werkzeug auf einfache Weise durch Öffnen des Aufnahmeraums zu entnehmen. Das Verschlusselement kann hierbei auch zum einfachen Handhaben des mit diesem verbundenen Werkzeugs dienen. Besonders bevorzugt ist es, dass es sich bei diesem Werkzeug um einen Reparaturdorn handelt. Ein derartiger Reparaturdorn ist Bestandteil eines Reparaturkits zur Reparatur größerer Löcher eines schlauchlosen Reifens. Insbesondere ist dieser Reparaturdorn Bestandteil eines unter dem Markennamen Dynaplug vertriebenen Werkzeugkits.

Des Weiteren ist es bevorzugt, dass das Verschlusselement über ein Gewinde mit dem Werkzeugelement verbunden ist. Der Aufnahmeraum des Werkzeugelements kann somit auf einfache Weise durch das Verschlusselement geöffnet oder verschlossen werden.

Bei einer besonders bevorzugten Weiterbildung der Erfindung ist das Verschlusselement derart ausgebildet, dass es auf einer der Ventil-Verbindungseinrichtung zugewandten Seite ein Verbindungselement zum Verbinden des Verschlusselements mit der Ventil-Verbindungseinrichtung aufweist. Bei diesem Verbindungselement handelt es sich in bevorzugter Weiterbildung um ein Gewinde. Das Verschlusselement hat somit mehrere Funktionen. Einerseits dient es, insbesondere durch Vorsehen von zwei Verbindungselementen, die insbesondere als Gewinde ausgebildet sind, zum Verbinden des Werkzeugelements mit der Ventil-Verbindungseinrichtung. Ferner weist es die Funktion auf, ein Werkzeug wie insbesondere einen Reparaturdorn zu tragen bzw. mit diesem verbunden zu sein, um die Handhabung des entsprechenden Werkzeugs zu vereinfachen.

In einer besonders bevorzugten Ausführungsform der Erfindung ist die Ventil-Verbindungseinrichtung auf der dem Verbindungselement zugewandten Seite derart ausgebildet, dass die Ventil-Verbindungseinrichtung mit einem Fahrradventil verbunden werden kann. Diese Verbindung erfolgt vorzugsweise unmittelbar. Insofern ist die Ventil-Verbindungseinrichtung auf der dem Verbindungselement zugewandten Seite vorzugweise mit einem Innengewinde versehen, so dass die Ventil-Verbindungseinrichtung unmittelbar auf ein Fahrradventil aufgeschraubt werden kann. Ggf. kann auch ein Zwischenelement wie ein Schlauch vorgesehen sein, um die Ventil-Verbindungseinrichtung des erfindungsgemäßen Fahrradwerkzeugs über dem Schlauch mit dem Fahrradventil zu verbinden.

Des Weiteren ist es besonders bevorzugt, dass die Ventil-Verbindungseinrichtung auf der dem Verbindungselement gegenüberliegenden Seite ein Aufnahmeelement aufweist. Dieses Aufnahmeelement dient zum Verbinden der Ventil-Verbindungseinrichtung mit einer Gaskartusche. Insofern ist es besonders bevorzugt, dass das Aufnahmeelement ein Innengewinde aufweist, in das ein an einem Auslass der Gaskartusche vorgesehenes Außengewinde eingeschraubt werden kann. Ferner ist das Aufnahmeelement vorzugsweise derart ausgebildet, dass beim Einschrauben der Gaskartusche diese geöffnet wird.

Das erfindungsgemäße Fahrradwerkzeug kann somit beispielsweise zur Reparatur eines Lochs in einem schlauchlosen Reifen verwendet werden. Hierzu wird zunächst mit Hilfe des Reifendorns das entsprechende Loch aufgeweitet und beispielsweise ein Gummipfropfen oder dergleichen eingesetzt. Dies kann insbesondere entsprechend dem unter dem Markennamen Dynaplug bekannten Reparaturkit erfolgen. Anschließend wird die Ventil-Verbindungseinrichtung unmittelbar oder unter Zwischenschaltung eines Verbindungsschlauchs auf das Fahrradventil aufgeschraubt. Sodann kann auf einfache Weise eine mitgeführte Gaskartusche auf der gegenüberliegenden Seite der Ventil-Verbindungseinrichtung eingeschraubt werden. Da das hier vorgesehene Aufnahmeelement vorzugsweise derart ausgebildet ist, dass beim Einschrauben der Gaskartusche diese geöffnet wird, erfolgt ein automatisches Befüllen des reparierten schlauchlosen Reifens.

Alternativ zur Verbindung der Ventil-Verbindungseinrichtung mit einem Innengewinde, das auf der dem Verbindungselement gegenüberliegenden Seite der Ventil-Verbindungseinrichtung vorgesehen ist, kann die Verbindung der Gaskartusche auch auf derjenigen Seite der Ventil-Verbindungseinrichtung erfolgen, auf der das Verbindungselement angeordnet ist. Hierzu wird zunächst das Verbindungselement abgeschraubt und sodann die Gaskartusche eingeschraubt. Das gegenüberliegende Ende, d.h. das Ende der Ventil-Verbindungseinrichtung, das der Kartusche gegenüberliegt, wird mittelbar oder unmittelbar mit dem Fahrradventil verbunden. Ggf. kann zur Verbindung ein entsprechender Schlauch vorgesehen sein.

In bevorzugter Weiterbildung der Erfindung weist die Ventil-Verbindungseinrichtung einen Hohlraum auf, der insbesondere zwischen dem Aufnahmeelement und dem Verbindungselement angeordnet ist. In diesem Hohlraum können Werkzeuge oder beispielsweise Pfropfen oder dergleichen des Reparaturkits aufbewahrt werden.

Bei dem erfindungsgemäßen Fahrradwerkzeugs weist das Werkzeugelement eine Werkzeughalterung auf. Die Werkzeughalterung ist an einem von der Ventil-Verbindungseinrichtung abgewandten Ende des Werkzeugelements vorgesehen. Die Werkzeughalterung dient zur Aufnahme eines Werkzeugs wie eines Bits oder dergleichen. Erfindungsgemäß ist die Werkzeughalterung als Ratsche ausgebildet. Vorteilhaft ist insbesondere, dass aufgrund der langgestreckten Ausgestaltung des erfindungsgemäßen Fahrradwerkzeugs ein guter Hebelarm besteht. Insbesondere wenn das Werkzeugelement mit einem Werkzeug verbunden ist und zusätzlich mit der Ventil-Verbindungseinrichtung verbunden ist, dient die Ventil-Verbindungseinrichtung zusammen mit dem Werkzeugelement als Griff zum Betätigen des Werkzeugs, insbesondere der Ratsche. Erfindungsgemäß ist das Bit oder ein anderes entsprechendes Werkzeug in montiertem Zustand derart in der Werkzeughalterung gehalten ist, dass eine Längsachse des Bits oder dergleichen im Wesentlichen senkrecht zu einer Längsachse der Ventil-Verbindungseinrichtung angeordnet ist.

Vorzugsweise ist das Werkzeugelement zumindest im Bereich des Aufnahmeraums zylindrisch, insbesondere kreiszylindrisch ausgebildet. Hieran schließt sich der Bereich der Werkzeughalterung an. Dieser ragt im Außenumfang vorzugsweise nicht über die äußeren Abmessungen des Werkzeugelements im Bereich des Aufnahmeraums.

In einer Weiterbildung der Erfindung kann zusätzlich ein weiteres Werkzeugelement vorgesehen sein. Dieses weitere Werkzeugelement kann zwischen der Ventil-Verbindungseinrichtung und dem Werkzeugelement und/oder auf einer dem Werkzeugelement gegenüberliegenden Seite der Ventil-Verbindungseinrichtung angeordnet sein. Insbesondere ist das weitere Werkzeugelement ggf. über eine Schraubverbindung mit der Ventil-Verbindungseinrichtung und/oder dem Werkzeugelement verbunden. Vorzugsweise ist das weitere Werkzeugelement ebenfalls zylindrisch, insbesondere kreiszylindrisch ausgebildet und kann einen weiteren Aufnahmeraum, beispielsweise zur Aufnahme von einem oder mehreren Bits und dergleichen dienen.

Des Weiteren betrifft die Erfindung einen Fahrradwerkzeug-Kit. Dieser umfasst ein Fahrradwerkzeug wie vorstehend beschrieben und ist insbesondere vorteilhaft weitergebildet. Ferner umfasst der Fahrradwerkzeug-Kit mindestens eine Gaskartusche, um mit Hilfe der Ventil-Verbindungseinrichtung auf einfache Weise einen Fahrradreifen zu befüllen. Dies ist unabhängig davon, ob der Fahrradreifen zuvor mit dem Reparaturdorn oder auf andere Weise repariert bzw. geflickt wurde. Ggf. kann der Fahrradwerkzeug-Kit auch einen Verbindungsschlauch aufweisen, der zur Verbindung des Ventil-Verbindungseinrichtung mit einem Fahrradventil dient.

Nachfolgend wird die Erfindung anhand einer bevorzugten Ausführungsform unter Bezugnahme auf die anliegenden Zeichnungen näher erläutert.

Es zeigen:
- Fig. 1: eine schematische perspektivische Ansicht des Fahrradwerkzeugs in geschlossenem Zustand,
- Fig. 2: eine schematische perspektivische Seitenansicht des Fahrradwerkzeugs mit eingesetztem Bit,
- Fig. 3: einen schematischen Längsschnitt einer erfindungsgemäßen Ausführungsform des Fahrradwerkzeugs,
- Fig. 4: eine schematische Einzelteilzeichnung der wesentlichen Bestandteile des erfindungsgemäßen Fahrradwerkzeugs, und

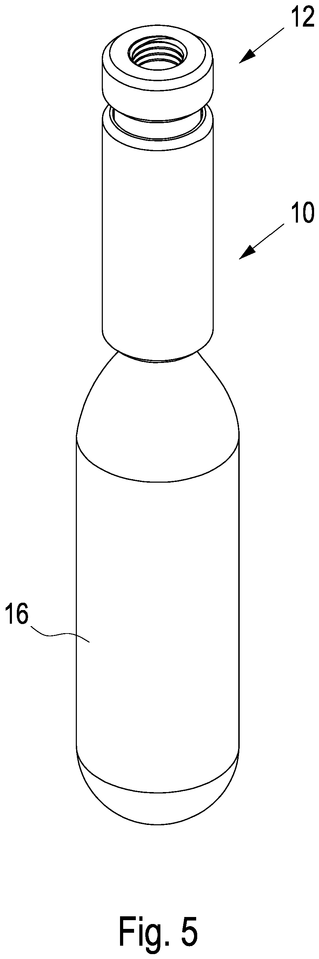

- Fig. 5: eine schematische perspektivische Seitenansicht der Ventil-Verbindungseinrichtung des Fahrradwerkzeugs zusammen mit einer Gaskartusche.

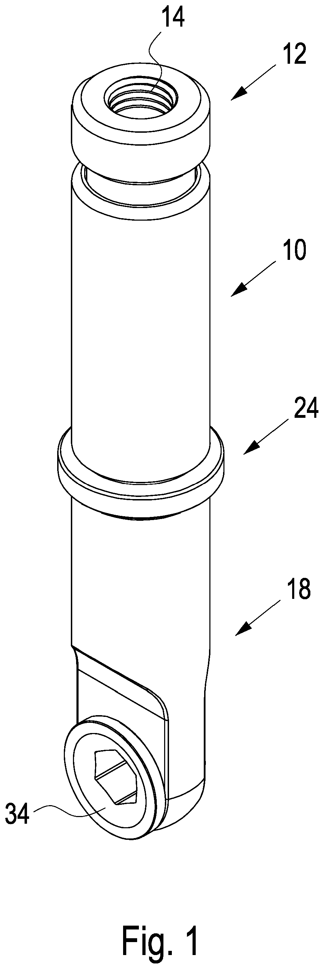

Das Fahrradwerkzeug weist im dargestellten Ausführungsbeispiel eine Ventil-Verbindungseinrichtung 10 auf. Die Ventil-Verbindungseinrichtung 10 weist an ihrem in Fig. 1 freien Ende 12 ein Gewinde 14 auf. Über das Gewinde 14 kann die Ventil-Verbindungseinrichtung 10 mit einem nicht dargestellten Fahrradventil verbunden werden. Ggf. kann anstelle einer unmittelbaren Verbindung eine mittelbare Verbindung über einen Schlauch erfolgen.

Ferner weist das erfindungsgemäße Fahrradwerkzeug ein Werkzeugelement 18 auf. Das Werkzeugelement 18 weist einen Aufnahmeraum 20 auf. Im Bereich des Aufnahmeraums 20 ist das Werkzeugelement 18 im dargestellten Ausführungsbeispiel kreiszylindrisch ausgebildet. Ferner ist im dargestellten Ausführungsbeispiel auch die Ventil-Verbindungseinrichtung 10 im Wesentlichen kreiszylindrisch ausgebildet.

In dem Aufnahmeraum 20 des Werkzeugelements 18 kann ein Werkzeug 22 angeordnet werden. Im dargestellten Ausführungsbeispiel handelt es sich bei dem Werkzeug 22 um einen Reparaturdorn. Dieser kann bei geschlossenem Fahrradwerkzeug innerhalb des Aufnahmeraums 20 angeordnet werden. Der Reparaturdorn 22 ist mit einem Verschlusselement 24 verbunden. Das Verschlusselement 24 weist auf derjenigen Seite, an der auch der Reparaturdorn 22 angeordnet ist, einen Ansatz 26 auf. Der Ansatz 26 ist mit einem Außengewinde versehen. Das Außengewinde 26 kann in ein Innengewinde 28 eingeschraubt werden, das in der in Längsrichtung 30 vorgesehenen Öffnung des Aufnahmeraums 20 angeordnet ist.

Das Werkzeugelement 18 weist an einem Ende 32 eine Werkzeughalterung 34 auf, bei der es sich erfindungsgemäß um eine Ratsche handelt. Die Werkzeughalterung 34 dient zur Aufnahme eines Werkzeugs wie eines Bits 36.

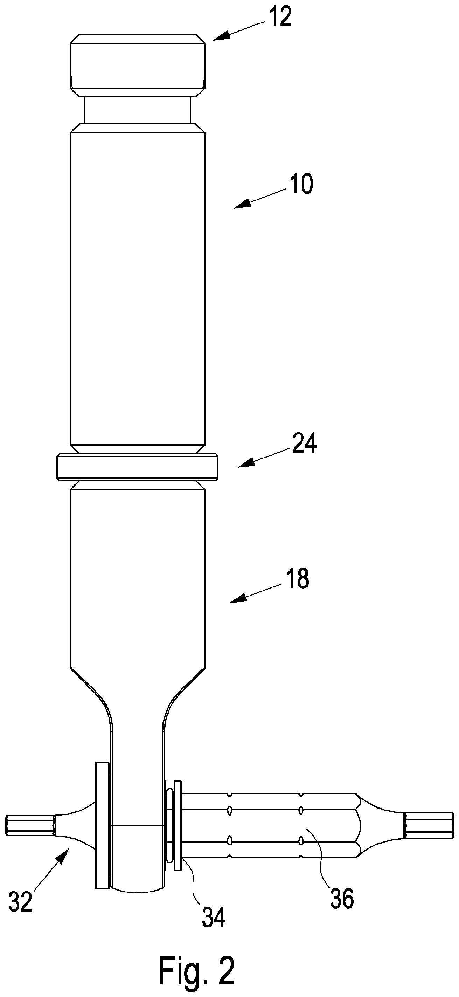

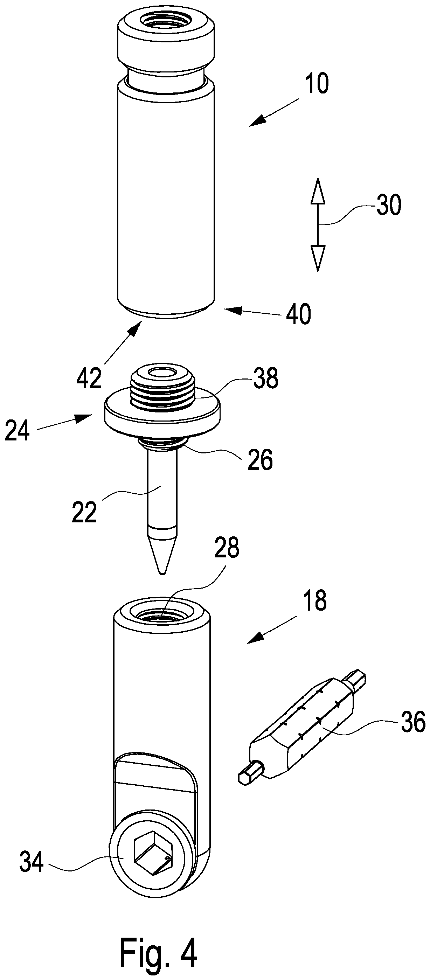

Zum Handhaben des Reparaturdorns 22 kann dieser mit der Ventil-Verbindungseinrichtung 10 verbunden sein. Die Verbindung erfolgt vorzugsweise über einen an dem Verschlusselement 24 vorgesehenen Ansatz 38 (Fig. 2 und 4), der dem Ansatz 26 gegenüberliegt und vorzugsweise an seiner Außenseite ebenfalls ein Gewinde aufweist. Die Ventil-Verbindungseinrichtung 10 weist an ihrem dem Verschlusselement 24 zugewandten Ende 40 eine Ausnehmung 42 mit Innengewinde auf, in die der Ansatz 38 einschraubbar ist. Die Ventil-Verbindungseinrichtung 10 kann beispielsweise einen Hohlraum zur Aufnahme von Reparaturmaterial oder Werkzeug aufweisen.

Das geschlossene erfindungsgemäße Fahrradwerkzeug (Fig. 2) weist ähnliche Außenabmessungen wie eine kleine, am Fahrrad mitgeführte Fahrradpumpe auf. Insbesondere weist das Fahrradwerkzeug in geschlossenem Zustand eine Länge von weniger als 15 cm, insbesondere weniger als 10 cm auf. Der Durchmesser bzw. die Außenabmessungen liegen im Bereich von 10 bis 20 mm.

Zum Befüllen eines ggf. zunächst mit Hilfe des Reparaturdorns 20 und entsprechendem Reparaturmaterial geflickten bzw. reparierten Fahrradmantels ist das erfindungsgemäße Fahrradwerkzeug ebenfalls geeignet. Hierzu wird die Ventil-Verbindungseinrichtung 10 mit dem Gewinde 14 auf das Ventil aufgeschraubt, wobei ggf. ein Schlauch zwischengeschaltet wird. Hieran anschließend wird die Kartusche 16 in das dem Gewinde 14 gegenüberliegende Innengewinde 42 eingeschraubt. Hierbei erfolgt vorzugsweise ein automatisches Öffnen der Kartusche.

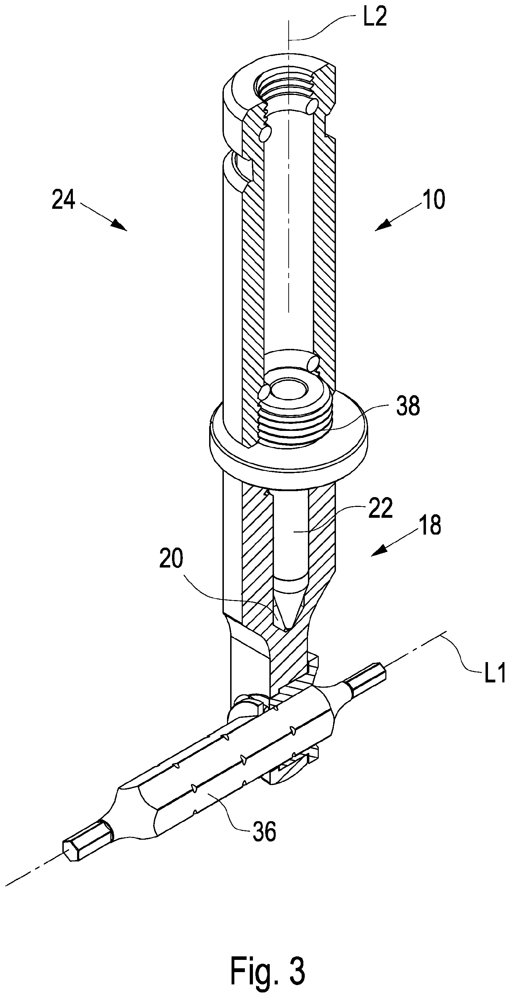

Erfindungsgemäß (Fig. 3) ist eine Längsachse L1 eines Bits 36 im Wesentlichen senkrecht zu einer Längsachse L2 der Ventil-Verbindungseinrichtung 10 angeordnet.

## Patentansprüche

1. Fahrradwerkzeug mit
einer Ventil-Verbindungseinrichtung (10) und
einem Werkzeugelement (18), das mit der Ventil-Verbindungseinrichtung (10) in deren Längsrichtung (30) verbunden ist und an einem von der Ventil-Verbindungseinrichtung (10) abgewandten Ende (32) eine Werkzeughalterung (34) aufweist,
wobei
die Werkzeughalterung (34) zur Aufnahme eines Bits (36) geeignet ist,
**dadurch gekennzeichnet, dass** eine Längsachse eines in der Werkzeughalterung (34) aufgenommenen Bits (36) senkrecht zu einer Längsachse der Ventil-Verbindungseinrichtung (10) angeordnet ist, und dass die Werkzeughalterung (34) als Ratsche ausgebildet ist.

2. Fahrradwerkzeug nach Anspruch 1, **dadurch gekennzeichnet, dass** das Werkzeugelement (18) einen Aufnahmeraum (20) aufweist.

3. Fahrradwerkzeug nach Anspruch 2, **dadurch gekennzeichnet, dass** der Aufnahmeraum (20) von einem Verschlusselement (24) verschlossen ist.

4. Fahrradwerkzeug nach Anspruch 2, **dadurch gekennzeichnet, dass** das Verschlusselement (24) mit einem Werkzeug (22), insbesondere einem Reparaturdorn verbunden ist, das bzw. der in dem Aufnahmeraum (20) anordenbar ist.

5. Fahrradwerkzeug nach einem der Ansprüche 2-4, **dadurch gekennzeichnet, dass** das Verschlusselement (24) ein Gewinde aufweist, um mit dem Werkzeugelement (18) insbesondere zum Verschließen des Aufnahmeraums (20) verbindbar zu sein.

6. Fahrradwerkzeug nach einem der Ansprüche 1-5, **dadurch gekennzeichnet, dass** das Verschlusselement (24) auf einer der Ventil-Verbindungseinrichtung (10) zugewandten Seite ein Verbindungselement (38) zum Verbinden mit der Ventil-Verbindungseinrichtung (10) aufweist.

7. Fahrradwerkzeug nach einem der Ansprüche 1-6, **dadurch gekennzeichnet, dass** das Verbindungselement (38) ein Gewinde aufweist.

8. Fahrradwerkzeug nach einem der Ansprüche 1-7, **dadurch gekennzeichnet, dass** die Ventil-Verbindungseinrichtung (10) zum Verbinden mit dem Verbindungselement (38) ein Innengewinde aufweist, wobei das Innengewinde vorzugsweise derart ausgebildet ist, dass es auf ein Fahrradventil aufschraubbar ist und/oder in das Innengewinde (42) eine Gaskartusche (16) einschraubbar ist.

9. Fahrradwerkzeug nach einem der Ansprüche 6-8, **dadurch gekennzeichnet, dass** die Ventil-Verbindungseinrichtung (10) auf einer dem Verbindungselement (38) gegenüberliegenden Seite ein Aufnahmeelement zum Verbinden mit einem Fahrradventil und/oder einer Gaskartusche aufweist.

10. Fahrradwerkzeug nach Anspruch 9, **dadurch gekennzeichnet, dass** das Aufnahmeelement ein Innengewinde (14) aufweist.

11. Fahrradwerkzeug nach einem der Ansprüche 2-10, **dadurch gekennzeichnet, dass** das Werkzeugelement (18) zumindest im Bereich des Aufnahmeraums (20) zylindrisch ausgebildet ist.

12. Fahrradwerkzeug nach einem der Ansprüche 1-11, **dadurch gekennzeichnet, dass** zwischen der Ventil-Verbindungseinrichtung (10) und dem Werkzeugelement (18) und/oder auf einer dem Werkzeugelement (18) gegenüberliegenden Seite der Ventil-Verbindungseinrichtung (10) ein weites Werkzeugelement vorgesehen ist, wobei das weitere Werkzeugelement vorzugsweise einen Aufnahmeraum für Werkzeuge aufweist.

13. Fahrradwerkzeug-Kit mit einem Fahrradwerkzeug nach einem der Ansprüche 1-12 und einer Gaskartusche (16).

## Claims

1. A bicycle tool, comprising
a valve connection means (10), and
a tool element (18) being connecting with the valve connection means (10) in its longitudinal direction (30) and comprising a tool holder (34) at an end (32) facing away from the valve connection means (10),
wherein the tool holder (34) is suitable for receiving a bit (36),
**characterized in that** a longitudinal axis of a bit (36) received in the tool holder (34) is arranged perpendicular to a longitudinal axis of the valve connection means (10), and that the toolholder (34) is formed as a ratchet.

2. The bicycle tool according to claim 1, **characterized in that** the tool element (18) comprises a receiving space (20).

3. The bicycle tool according to claim 2, **characterized in that** the receiving space (20) is closed by a closing element (24).

4. The bicycle tool according to claim 2, **characterized in that** the closing element (24) is connected with a tool (22), in particular with a repair mandrel, which is disposable in the receiving space (20).

5. The bicycle tool according to any one of claims 2-4, **characterized in that** the closing element (24) comprises a thread in order to be connectable with the tool element (18), in particular for closing the receiving space (20).

6. The bicycle tool according to any one of claims 1-5, **characterized in that** the closing element (24) comprises a connection element (38) at a side facing the valve connection means (10) for connecting with the valve connection means (10).

7. The bicycle tool according to any one of claims 1-6, **characterized in that** the connection element (38) comprises a thread.

8. The bicycle tool according to any one of claims 1-7, **characterized in that** the valve connection means (10) comprises an inner thread for connecting with the connection element (38), wherein the inner thread is preferably configured such that it is screwable onto a bicycle valve and/or that a gas cartridge (16) is screwable into the inner thread (42).

9. The bicycle tool according to any one of claims 6-8, **characterized in that** the valve connection means (10) comprises a receiving element at a side opposite the connection element (38) for connecting with a bicycle valve and/or gas cartridge.

10. The bicycle tool according to claim 9, **characterized in that** the receiving element comprises an inner thread (14).

11. The bicycle tool according to any one of claims 2-10, **characterized in that** the tool element (18) is at least in the area of the receiving space (20) formed cylindrically.

12. The bicycle tool according to any one of claims 1-11, **characterized in that** a further tool element is provided between the valve connection means (10) and the tool element (18) and/or at a side of the valve connection means (10) opposite the tool element (18), wherein the further tool element preferably comprises a receiving space for tools.

13. A bicycle tool kit comprising a bicycle tool according to any one of claims 1-12 and a gas cartridge (16).

## Revendications

1. Outil pour bicyclette avec
un dispositif de raccordement de valve (10) et
un élément d'outil (18) qui est raccordé au dispositif de raccordement de valve (10) dans la direction longitudinale (30) de ce dernier et comprend, à une extrémité (32) opposée au dispositif de raccordement de valve (10), un support d'outil (34),
le support d'outil (34) étant adapté pour recevoir un embout-tournevis (36),
**caractérisé en ce qu'**un axe longitudinal d'un embout-tournevis (36) reçu dans le support d'outil (34) est disposé perpendiculairement à un axe longitudinal du dispositif de raccordement de valve (10) et **en ce que** le support d'outil (34) est configuré comme cliquet.

2. Outil pour bicyclette selon la revendication 1, **caractérisé en ce que** l'élément d'outil (18) comprend un espace de réception (20).

3. Outil pour bicyclette selon la revendication 2, **caractérisé en ce que** l'espace de réception (20) est fermé par un élément de fermeture (24).

4. Outil pour bicyclette selon la revendication 2, **caractérisé en ce que** l'élément de fermeture (24) est raccordé à un outil (22), notamment un mandrin de réparation, qui peut être logé dans l'espace de réception (20).

5. Outil pour bicyclette selon l'une des revendications 2 à 4, **caractérisé en ce que** l'élément de fermeture (24) est pourvu d'un taraudage afin de pouvoir être raccordé à l'élément d'outil (18), notamment pour fermer l'espace de réception (20).

6. Outil pour bicyclette selon l'une des revendications 1 à 5, **caractérisé en ce que** l'élément de fermeture (24) comprend, sur un côté en regard du dispositif de raccordement de valve (10), un élément de raccordement (38) pour le raccordement au dispositif de raccordement de valve (10).

7. Outil pour bicyclette selon l'une des revendications 1 à 6, **caractérisé en ce que** l'élément de raccordement (38) est pourvu d'un filetage.

8. Outil pour bicyclette selon l'une des revendications 1 à 7, **caractérisé en ce que** le dispositif de raccordement de valve (10) comprend, pour le raccordement à l'élément de raccordement (38), un taraudage, le taraudage étant configuré de préférence de façon qu'il puisse être vissé sur une valve de bicyclette et/ou qu'une cartouche de gaz (16) puisse être vissée dans le taraudage (42).

9. Outil pour bicyclette selon l'une des revendications 6 à 8, **caractérisé en ce que** le dispositif de raccordement de valve (10) comprend, sur un côté opposé à l'élément de raccordement (38), un élément de réception destiné au raccordement à une valve de bicyclette et/ou une cartouche de gaz.

10. Outil pour bicyclette selon la revendication 9, **caractérisé en ce que** l'élément de réception comprend un taraudage (14).

11. Outil pour bicyclette selon l'une des revendications 2 à 10, **caractérisé en ce que**, au moins dans la zone de l'espace de réception (20), l'élément d'outil (18) a une forme cylindrique.

12. Outil pour bicyclette selon l'une des revendications 1 à 11, **caractérisé en ce qu'**un autre élément d'outil est prévu entre le dispositif de raccordement de valve (10) et l'élément d'outil (18) et/ou sur un côté du dispositif de raccordement de valve opposé à l'élément d'outil (18), ledit autre élément d'outil comprenant, de préférence, un espace de réception pour des outils.

13. Ensemble d'outils pour bicyclette avec un outil pour bicyclette selon l'une des revendications 1 à 12 et une cartouche de gaz (16).
